# EUROPÄISCHE PATENTSCHRIFT

(11) **EP 0 816 738 B1**
(45) Veröffentlichungstag und Bekanntmachung des Hinweises auf die Patenterteilung: **26.08.1998**
(21) Anmeldenummer: 97105511.6
(22) Anmeldetag: 03.04.1997
(51) Int. Cl.: F16L 27/10, F16L 27/111, F01N 7/18

(54) **Entkopplungselement für Schwingungen in Rohrleitungen**
Decoupler device for vibrations in pipelines
Dispositif de découplement pour vibrations dans conduits

(30) Priorität: 25.06.1996 DE 29611142 U
(43) Veröffentlichungstag der Anmeldung: 07.01.1998
(73) Patentinhaber: FEODOR BURGMANN DICHTUNGSWERKE GmbH & Co., D-82515 Wolfratshausen (DE)
(72) Erfinder: Morgner, Dietmar, 81671 München (DE); Deinhard, Hans, 85551 Kirchheim (DE)
(74) Vertreter: Schmidt, Horst, Dr.

(56) Entgegenhaltungen:
- EP-A- 0 432 436
- EP-A- 0 615 595
- DE-A- 4 401 827
- DE-C- 931 988
- DE-U- 9 307 142
- FR-A- 2 701 753
- US-A- 3 369 829
- US-A- 5 299 837

## Beschreibung

Die Erfindung betrifft ein Entkopplungselement für Schwingungen in Rohrleitungen, insbesondere in Abgasanlagen von Brennkraftmaschinen.

Die Erfindung bezieht sich insbesondere auf ein fluiddichtes Entkopplungselement, das aufgrund seiner Struktur zwar axiale Längenänderungen zulässt, jedoch gegen mechanische Beanspruchungen, insbesondere Torsionsbeanspruchungen empfindlich ist, so dass wenigstens ein Teil der zwischen den endseitigen Rohranschlusstücken wirkenden Kräften am balgartig gewellten Verbindungselement bypassartig vorbeigeleitet werden muss. Diese Entkopplungselemente können nach der Art der Ausgestaltung ihrer Gelenkfederanordnungen, die eine axiale und winkelmässige Relativbewegung zwischen den endseitigen Rohranschlusstücken ohne übermässige Beanspruchung des balgartigen Verbindungselementes ermöglichen, unterteilt werden in solche, bei denen das Federelement eine um die Mittenlängsachse des Entkopplungselementes sich ertreckende Schraubenfeder oder ein Drahtseilfederelement umfasst, und in solche, bei denen einzelne Federeinheiten an umfänglich beabstandeten Stellen des Entkopplungselementes vorgesehen sind. Beispiele für Entkopplungselemente der ersten Art sind in folgenden Druckschriften zu finden: DE-A-44 01 827, EP-A-0 432 436, EP-A-0 615 595, US-A-3 369 829. Die Erfindung ist auf ein Entkopplungselement der zweiten Art gerichtet, wie es beispielsweise aus der US-A-5 299 837 bekannt ist. Als Federeinheiten dienen bei der bekannten Anordnung drei an umfänglich versetzt zueinander angeordneten Stellen längs eines Rohranschlusstückes in einer radialen Ebene vorgesehene Ringfedereinheiten, die jeweils mit dem Gehäuse bzw. dem Rohranschlusstück fest verbunden sind. Für die Unterbringung der Ringfedereinheiten ist ein entsprechender Platzbedarf zwischen Gehäuse und Rohranschlusstück erforderlich, so dass das bekannte Entkopplungselement eine grosse radiale Abmessung aufweist und damit dem Trend in der Automobilindustrie zu leichteren, klein bemessenen Entkopplungselementen entgegenwirkt. Ein weiterer Nachteil der bekannten Anordnung ist, dass die Ringfedereinheiten das balgartig gewellte Verbindungselement nicht oder nur bedingt gegen Torsionsbeanspruchungen zu schützen vermag, wodurch die Standzeit derartiger Entkopplungselemente herabgesetzt wird.

Der Erfindung liegt die Aufgabe zugrunde, ein Entkopplungselement mit einer Gelenkfederanordnung aus mehreren unabhängigen Federeinheiten zu schaffen, das bei montage- und fertigungsgünstigem Aufbau mit geringen baulichen Abmessungen bereitgestellt werden kann und einen wirksamen Schutz des balgartig gewellten Verbindungselementes gegenüber mechanischen Beanspruchungen, insbesondere Torsionsbeanspruchungen bietet. Ferner soll das Federverhalten der Gelenkfederanordnung leicht an die jeweiligen Anwendungsfälle optimal angepasst werden können, ohne dass es hierzu grösserer Modifikationen an der Grundstruktur des Entkopplungselementes bedarf.

Bezüglich der Lösung dieser Aufgabe wird auf den Patentanspruch 1 verwiesen. Danach umfasst jede Gelenkfederanordnung zwei oder mehrere umfänglich in Abstand voneinander angeordnete Federeinrichtungen, die anders als bei der vorbeschriebenen bekannten Anordnung der zweiten Art aus ein oder mehreren geradlinigen bandförmigen Blattfederelementen gebildet sind und mit axialem Spiel an umfänglich beabstandeten Bereichen des Gehäuses "schwimmend", d.h. nicht starr abgestützt sind. Jede Federeinrichtung stellt daher ein fertigungsgünstiges ebenes geradliniges Gebilde dar, dessen Federverhalten z.B. durch eine entsprechende Anzahl übereinander gestapelter Blattfederelemente in weiten Bereichen variiert werden kann. Die Federeinrichtungen liegen in einer radialen Ebene des Entkopplungselementes und durchsetzen mit Spiel nach Art einer Kreissekante schlitzförmige im Umfang des betreffenden Rohranschlusstückes eingebrachte Ausnehmungen dergestalt, dass eine axiale Bewegung des Rohranschlusstückes relativ zum Gehäuse zu einer Durchbiegung der Federeinrichtungen führt. Die Federeinrichtungen erlauben auch eine winkelmässige Verlagerung des Rohranschlusstückes. Gleichzeitig schaffen die Federeinrichtungen eine wirksame Verdrehsicherung für das Rohranschlusstück und damit einen Schutz des balgartigen Verbindungselementes gegen Torsionsbeanspruchungen, indem die Eingriffnahme der Federeinrichtungen mit den betreffenden schlitzförmigen Ausnehmungen verhindert, dass das Rohranschlusstück eine Drehbewegung vornehmen kann. Wegen der "schwimmenden" Abstützung der Federeinrichtungen am Gehäuse und der nicht starren Kopplung der Federeinrichtungen mit dem Rohranschlusstück wird nicht nur erreicht, dass die Bauteile spannungsfrei zusammenwirken können, sondern ergibt sich darüber hinaus der wesentliche Vorteil einer besonders montage- und fertigungsgünstigen Bauart, da für die Ausgestaltung der Gelenkfederanordnung grundsätzlich auf Schweiss- oder andersartige Verbindungsmassnahmen verzichtet werden kann. Für die Montage des erfindungsgemässen Entkopplungselementes reicht vielmehr die Anbringung einer einfache Bördelung aus, so dass die Fertigungskosten entsprechend niedrig sind. Der Platzbedarf für die Anordnung der Federeinrichtungen ist sehr gering und übersteigt kaum die radialen Abmessungen des balgartig gewellten Verbindungselementes. Die Federeinrichtungen können daher ohne weiteres innerhalb des Gehäuses vorgesehen werden, so dass das Entkopplungselement aussenseitig eine glatte zylindrische Ausgestaltung ähnlich einem Rohrabschnitt aufweisen kann, was Vorteile bei der Lagerhaltung und beim Einbau in die zumeist engen Raumverhältnisse bei Brennkraftmaschinen bietet. Ausserdem schafft eine geschlossene ungeteilte Gehäusekonstruktur, wie sie das erfindungsgemässe Entkopplungselement ermöglicht, einen wirksamen Schutz der Gelenkfederanordnung sowie der übrigen Teile des Entkopplungselementes gegen Steinschlag und andere äussere Beeinträchtigungen.

Gemäss einer bevorzugten Weiterbildung der Erfindung kann jede schlitzförmige Ausnehmung eine Spaltweite haben, die zwischen einem Minimum an einer zentralen Engstelle der Ausnehmung zu einem Maximum an deren äusseren Endbereichen divergiert. Dabei kann die Spaltweite stetig oder stufenförmig divergieren. In beiden Fällen findet eine kraftübertragende Eingriffnahme zwischen der Federeinrichtung und dem Rohranschlusstück zunächst nur an einem zentralen Bereich der schlitzförmigen Ausnehmung statt, und erst bei weiterer Durchbiegung der Federeinrichtung kommen andere Bereiche der schlitzförmigen Ausnehmungen zum Tragen, was eine stetige oder stufenförmige Änderung des Federverhaltens zur Folge hat. Dadurch kann erreicht werden, dass die Federkennlinie bei unterschiedlichem Durchbiegungsgrad der Federeinrichtung bzw. Relativverlagerung zwischen Gehäuse und betreffendem Rohranschlusstück verändert wird. Schliesslich kann gemäss einer anderen Weiterbildung der Erfindung vorgesehen sein, dass sich ein radialer Anschlagteil des Rohranschlusstückes in einen Raum zwischen einer Gehäuseschulter und den Federeinrichtungen erstreckt, um eine übermässige Relativbewegung zwischen dem Rohranschlusstück und dem Gehäuse zu begrenzen. Dadurch wird eine wirksamer Überlastschutz beim Transport, der Lagerhaltung und beim Betrieb geschaffen, was ebenfalls zu langen Standzeiten des Entkopplungselementes beiträgt. Im übrigen wird auf die Patentansprüche verwiesen.

Die Erfindung wird nachfolgend anhand von Ausführungsformen und der Zeichnung näher erläutert. Es zeigen:
Fig. 1 in teilweise längsgeschnittener Ansicht ein Entkopplungselement gemäss einer ersten Ausführungsform der Erfindung,
Fig. 2 das Entkopplungselement nach Fig. 1 in einer Ansicht von rechts,
Fig. 3 eine fragmentarische geschnittene Ansicht längs der Schnittlinie III-III in Fig. 2,
Fig. 4A-4C schematische Ansichten zur Erläuterung der Lagebeziehung von Aufbauteilen des Entkopplungselementes nach der Erfindung bei unterschiedlichen Betriebsstellungen,
Fig. 5 in längsgeschnittener Teilansicht ein Entkopplungselement gemäss einer zweiten Ausführungsform der Erfindung, und
Fig. 6 in längsgeschnittener Teilansicht eine modifizierte Ausführung eines Entkopplungselementes nach der Erfindung.

In der Zeichnung tragen gleiche oder ähnliche Bauteile die gleichen Bezugszeichen.

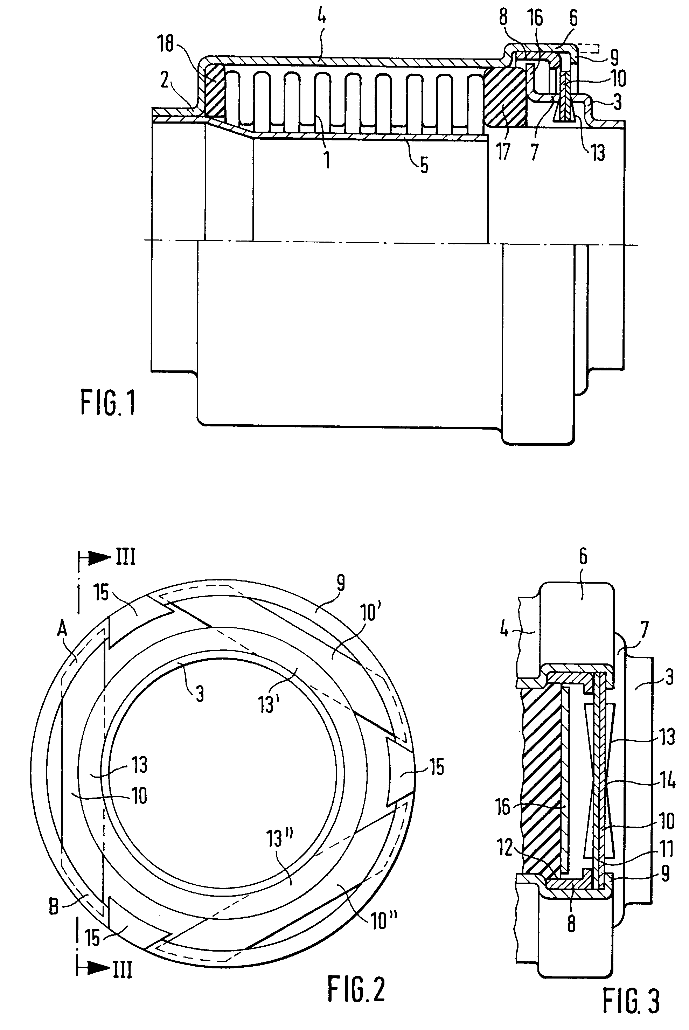

Nachfolgend wird auf die Ausführungsform der Erfindung nach Fig. 1-3 Bezug genommen. Wie dargestellt, umfasst das Entkopplungselement ein balgartig gewelltes durchgehendes Verbindungselement 1 aus einem geeigneten Material, wie Metall, das an seinen axialen rohrförmigen Endbereichen mit jeweils einem Rohranschlusstück 2, 3 fest und abdichtend, z.B. durch Schweissen, verbunden ist. Mittels der Rohranschlusstücke 2, 3 kann das Entkopplungselement mit den Enden z.B. einer nicht gezeigten Abgasleitung einer Brennkraftmaschine verbunden werden.

In einem radialen Abstand vom balgartig gewellten Verbindungselement 1 ertreckt sich konzentrisch zu dessen Mittenlängsachse ein vorzugsweise zylindrisches steifes Gehäuse 4 nach Art eines Rohrabschnittes, welches das Verbindungselement 1 aussen umgibt. Die Erfindung ist jedoch auf eine derartige Konfiguration des Gehäuses 4 nicht beschränkt. Wenn erwünscht, können im Gehäuse 4 auch gewichtsminimierende Durchbrechungen oder Aussparungen vorgesehen sein.

Im Bereich des in der Zeichnung links- oder aufstromseitigen axialen Endes ist das Gehäuse 4 mit dem betreffenden Rohranschlusstück 2 fest verbunden. Das Rohranschlusstück 2 kann, wie dargestellt, auch integraler Teil des Gehäuses 4 sein.

Ein rohrförmiges Hitzeschutzelement 5 ist am inneren Umfang des aufstromseitigen Rohranschlusstückes 2, z.B. durch Schweissen, befestigt. Das Hitzeschutzelement 5 erstreckt sich koaxial inseitig des Verbindungselementes 1, wobei das freie axiale Ende des Hitzeschutzelementes 5 vorzugsweise nahe beim abstromseitigen Ende des gewellten Abschnitts des Verbindungselementes 1 angeordnet ist. Das Hitzeschutzelement 5 hat die Aufgabe, das Verbindungselement 1, insbesondere dessen gewellten Abschnitt, vor übermässiger Erhitzung durch die durch das Entkopplungselement strömenden Abgase einer Brennkraftmaschine zu schützen.

Nahe beim anderen in der Zeichnung rechts- oder abstromseitigen axialen Ende ist das Gehäuse 4 in seinem Durchmesser um ein geeignetes Mass erweitert, um eine nachfolgend näher beschriebene Gelenkfederanordnung aufzunehmen, durch die das Gehäuse 4 mit dem abstromseitigen Rohranschlusstück 3 verbunden ist. Der erweiterte Gehäuseabschnitt 6 bildet am Übergang zum Basisbereich des Gehäuses 4 eine innenseitige Schulter 12, vgl. Fig. 3. Vom äusseren axialen Ende des erweiterten Gehäuseabschnitts 6 ragt ein Ringflansch 9 uni ein geeignetes Mass radial nach innen, der eine weitere innenseitige Anlagefläche schafft.

Ein Positionierungsring 8 mit einer geringeren axialen Abmessung als die des Bereiches zwischen der Schulter 12 und der Anlagefläche des Ringflansches 9 ist im erweiterten Gehäuseabschnitt 6 aufgenommen und stützt sich mit einem seiner axialen Enden an der Schulter 12 ab. Das andere axiale Ende des Positionierungsringes 8 steht in einem geeigneten axialen Abstand von der Anlagefläche des Ringflansches 9, so dass dazwischen ein Freiraum mit einer axialen Abmessung definiert ist, die etwas grösser als die Dicke einer Federeinrichtung 10 ist, die nachfolgend näher beschrieben wird. Die Federeinrichtung 10 greift endseitig in den Freiraum ein und ist zwischen der Anlagefläche des Ringflansches 9 und dem benachbarten Ende des Positionierungsringes 8 mit einem geeigneten axialen Bewegungspiel "schwimmend" abgestützt.

Die Federeinrichtung 10 umfasst wenigstens ein band- oder streifenförmiges Blattfederelement 11 mit einer geeigneten Dicken- und Breitenabmessung aus einem Stahlmaterial. Vorzugsweise sind jedoch zwei oder mehrere derartige Blattfederelemente 11 zu einem Federpaket mit einer bestimmten Dicke zusammengefasst. Die Federeinrichtung 10 erstreckt sich geradlinig nach Art einer Kreissekante in einer radialen Ebene des Entkopplungselementes zwischen umfänglich beabstandeten Abstützungsstellen A, B am erweiterten Gehäuseabschnitt 6, wobei ein zwischenliegender Bereich der Federeinrichtung 10 in eine ausgerichtete schlitzförmige Ausnehmung 13 im Rohranschlusstück 3 mit Spiel eingreift, die in im wesentlichen in der gleichen radialen Ebene wie die der Federeinrichtung 10 vorgesehen ist. Die schlitzförmige Ausnehmung 13 ist in einem rohrförmigen koaxialen Abschnitt 7 des Rohranschlusstückes 3 mit vergrössertem Durchmesser eingebracht.

Wenigstens zwei, vorzugsweise drei, in gleichem Winkelabstand umfänglich voneinander beabstandete Federeinrichtungen 10 sind vorgesehen, wie dies Fig. 2 zeigt, wobei jeder Federeinrichtung 10 eine schlitzförmige Ausnehmung 13 im Rohranschlusstück 3 zugeordnet ist. Abschnitte 15, die aus einer gestrichelt in Fig. 1 andeuteten Bördelwand als axiale Verlängerung des Gehäuseabschnittes 6 geschaffen sind, aus der auch der Ringflansch 9 gebildet ist, greifen zwischen die Endbereiche benachbarter Federeinrichtungen 10 ein, um die gegenseitige umfängliche Position der Federeinrichtungen 10 zu fixieren. Anstelle der Abstandshalterabchnitte 15 kann auch die Bördelwand 9 direkt verdrehsichernd zwischen benachbarten Federeinrichtungen 10 eingedrückt sein. Auch könnte eine umfängliche Lagefixierung der Federeinrichtungen 10 auf andere Weise, z.B. durch in die Federeinrichtungen 10 im Bereich ihrer Abstützungsstellen A, B mit Spiel eingreifende Stifte erfolgen, welche axial vom Positionierungsring 8 oder Ringflansch 9 abstehen könnten.

Wichtig ist, dass weder die die umfängliche Lage fixierenden Mittel, d.h. die Bördelabschnitte 15, noch die die endseitige Abstützung der Federeinrichtungen 10 schaffenden Mittel, d.h. der Ringflansch 9 in Zusammenwirken mit dem Positionierungsring 8 einen starren Festsitz schaffen, sondern dass die Federeinrichtungen 10 "schwimmend", d.h. in Lossitz, gehalten sind.

Jede von einer Federeinrichtung 10 durchsetzte schlitzförmige Ausnehmung 13 hat vorzugsweise eine Spaltweite, die von einer zentralen Engstelle 14 zu den äusseren Enden der Ausnehmung divergiert, wie dies in Fig. 3 zu sehen ist. Die Spaltweite der Ausnehmung 13 an der Engstelle 14 ist an die Dicke der Federeinrichtung 10 so angepasst, dass die Federeinrichtung 10 mit einem geeigneten axialen Spiel in die Engstelle 14 eingreifen kann. Aufgrund der beschriebenen Konstruktion stellt jede Federeinrichtung 10 eine Einheit dar, die grundsätzlich unabhängig von den anderen Federeinrichtungen 10 eines Entkopplungselementes ist.

Eine axiale Relativbewegung zwischen dem Rohranschlusstück 3 und dem Gehäuse 4 hat zur Folge, dass wegen der Eingriffnahme der Federeinrichtung 10 mit den Begrenzungskanten der schlitzförmigen Ausnehmung 13 - uzw. zunächst nur an deren Engstelle 14 und später auch seitens anderer Bereiche - eine axiale Federkraft auf das Rohranschlusstück 3 ausgeübt wird, die umso stärker ist, je grösser die durch die besagte Relativbewegung hervorgerufene Durchbiegung der Federeinrichtung 10 ist. Die Stärke der Federkraft ist ferner abhängig von der Anzahl an umfänglich des Rohranschlusstückes 3 vorgesehenen Federeinrichtungen 10, der Anzahl, Breite und Dicke der Blattfederelemente 11, aus denen jede Federeinrichtung 10 zusammengesetzt ist, der freien Biegelänge der Federeinrichtung 10, der Konfiguration der schlitzförmigen Ausnehmung 13 sowie weiteren Auslegungsparametern. Die von jeder Federeinrichtung 10 ausgeübte Federkraft kann daher durch entsprechende Wahl der genannten Parameter in weiten Grenzen einzeln variiert und an die jeweiligen Anwendungsfälle optimal angepasst werden.

Bei der vorbeschriebenen und in Fig. 1-3 gezeigten Ausführungsformen der Erfindung vergrössert sich die Spaltweite der schlitzförmigen Ausnehmung 13 von der zentralen Engstelle 14 kontinuierlich linear nach aussen. Als Alternative könnte sich die Spaltweite auch stufenförmig linear nach aussen erweitern. In diesem Fall würde sich ein stufenförmig härter werdendes Federverhalten bei zunehmender Auslenkung der Federeinrichtung 10 ergeben. Eine kontinuierliche oder stufenförmige Erweiterung des Spaltes könnte auch durch einen bogenförmigen Verlauf der Begrenzungskanten der schlitzförmigen Ausnehmung 13 erhalten werden, so dass sich der Spalt kelchartig nach aussen erweitern würde. Schliesslich könnte der Spalt auch unsymmetrisch zu einer mittig durch die Engstelle 14 der schlitzförmigen Ausnehmung 13 gelegten Radialebene ausgebildet sein. Dadurch ergäbe sich ein unterschiedliches Federverhalten der Federeinrichtung 10 bei einer Relativbewegung zwischen dem Rohranschlusstück 3 und dem Gehäuse 4 in die eine oder andere axiale Richtung.

Wie weiter Fig. 1 und 3 zeigen, weist das Rohranschlusstück 3 einen radial nach aussen ragenden Bund oder Anschlagteil 16 auf, der in einen Raum hineinragt, der zwischen der Schulter 12 des erweiterten Gehäuseabschnittes 6 und einer Umbiegung am äusseren axialen Ende des Positionierungsringes 8 definiert ist. Der Bund 16 kann mit der zugewandten Seite der Umbiegung in Eingriff treten, wodurch eine der Begrenzungen für die axiale Bewegung des Bundes 16 und damit des Rohranschlusstückes 3 geschaffen ist. Eine weitere axiale Begrenzung wird durch die Schulter 12 des erweiterten Gehäuseabschnittes 6 erhalten, so dass die axiale Relativbewegung des Rohranschlusstückes 3 auf den Raum zwischen der Schulter 12 und der Umbiegung des Positionierungsringes 8 begrenzt ist. Darauf hinzuweisen ist, dass bei einer vereinfachten Ausgestaltung der Erfindung der Positionierungring 8 auch weggelassen werden könnte und die Federeinrichtung 10 durch andere Mittel, z.B. durch eine Gehäuseschulter oder dgl. die erforderliche axiale Abstützung findet. In diesem Fall würde eine der Begenzungen für die axiale Bewegung des Bundes 16 durch die Federeinrichtung 10 selbst bewirkt werden.

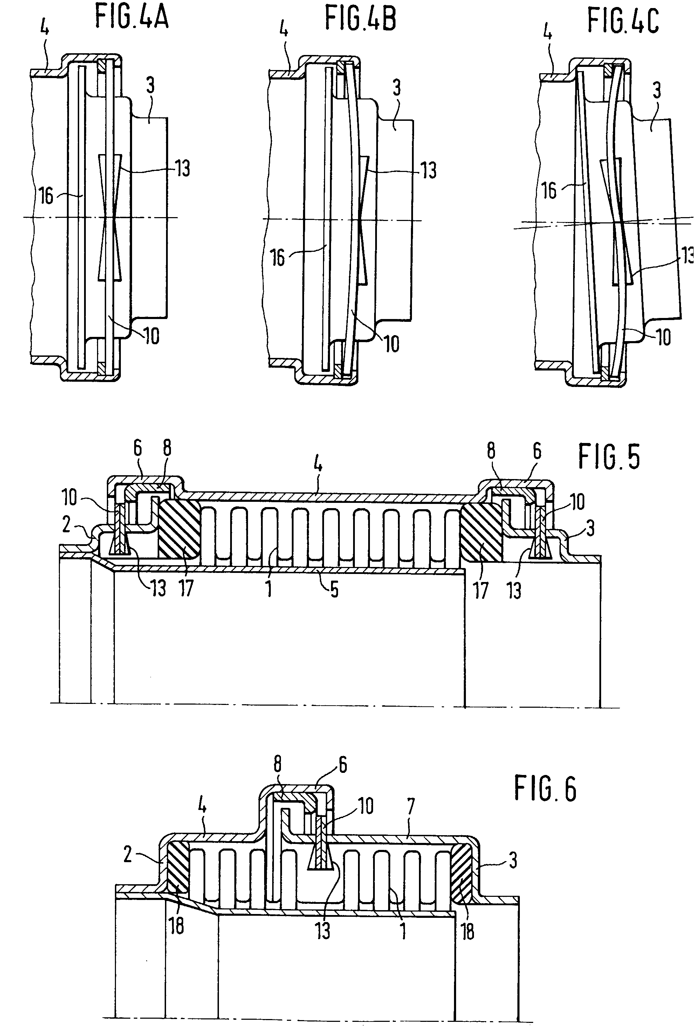

Fig. 4A bis 4C zeigen in schematischen Ansichten unterschiedliche Lagebeziehung zwischen dem Rohranschlusstück 3 und dem Gehäuse 4. Fig. 4A zeigt die Lage der erwähnten Bauteile im Ausgangszustand bei unbelasteter Federeinrichtung 10, so dass sich diese durchbiegungsfrei zwischen ihren endseitigen Abstützungsstellen A-B erstreckt und die schlitzförmige Ausnehmung 13 mit Spiel durchsetzt ist. Bei einer reinen axialen Verlagerung des Rohranschlusstückes 3 gegenüber dem Gehäuse 4, wie dies in Fig. 4B gezeigt ist, erfährt die Federeinrichtung 10 infolge der Eingriffnahme mit einer der axialen Begrenzungskanten der schlitzförmigen Ausnehmung 13 eine Durchbiegung, die auf das Rohranschlusstück 3 eine Rückstellkraft ausübt, die dieses in die in Fig. 4A gezeigte Ausgangsstellung zurückbringen will. Die Federeinrichtung 10 kann bei entsprechender Durchbiegung mit der betreffenden Begrenzungskante der Ausnehmung 13 über deren gesamten Länge in Eingriff treten. Bei Anlage des Bundes 16 des Rohranschlusstückes 3 an der Federeinrichtung 10 (bzw. Umbiegung des Positionierungsringes 8) kommt eine weitere axiale Bewegung des Rohranschlusstückes 3 relativ zum Gehäuse 4 zum Stillstand und wird damit die Durchbiegung der Federeinrichtung 10 begrenzt. Fig. 4C zeigt die Lagebeziehung der Teile bei einer winkelmässigen Verlagerung des Rohranschlusstückes 3 relativ zum Gehäuse 4. Die winkelmässige Verlagerung des Rohranschlusstückes 3 ist innerhalb der Grenzen möglich, die durch die Anlage eines umfänglichen Bereiches des Bundes 16 an der Gehäuseschulter 12 bzw. eines diametral gegenüberliegenden umfänglichen Bereiches des Bundes 16 an der Federeinrichtung 10 definiert sind. Bei einer winkelmässigen Verlagerung des Rohranschlusstückes 3 wird eine Rückstellkraft seitens der Federeinrichtung 10 aufgebracht, die das Rohranschlusstück 3 in die koaxiale Beziehung zur Mittellängsachse des Entkopplungselementes zurückbringen will.

Ein weiteres Merkmal des erfindungsgemässen Entkopplungselementes ist, dass eine Verdrehung des Rohranschlusstückes 3 relativ zum Gehäuse 4 um die Mittellängsachse des Entkopplungselementes durch die Federeinrichtung 10 unterbunden oder, wenn erwünscht, nur in Grenzen zugelassen wird. Diese Verdrehsicherung wird durch die Eingriffnahme einer der umfänglichen Endkanten der schlitzförmigen Ausnehmung 13 mit der zugewandten Seitenkante der Federeinrichtung 10 geschaffen. Bei einer Eingriffnahme der erwähnten Kanten wird eine weitere Drehung des Rohranschlusstückes 3 um die Mittellängsachse des Entkopplungselementes verhindert.

Fig. 5 zeigt eine Ausführungsform der Erfindung, bei der eine Gelenkfederanordnung mit dem vorbeschriebenen Aufbau im Bereich jedes axialen Endes des Gehäuses 4 vorgesehen ist, so dass anders als bei der Ausführungsform nach Fig. 1 das aufstromseitige Rohranschlusstück 2 nicht starr, sondern ebenfalls federnd mit dem Gehäuse 4 verbunden ist. Das aufstromseitige Rohranschlusstück 2 mit dem daran befestigten rohrförmigen Hitzeschutzelement 5 kann daher eine Ausbildung haben, die derjenigen des abstromseitigen Rohranschlusstückes 3 entspricht. Die Ausführungsform nach Fig. 5 ermöglicht, anders als diejenige nach Fig. 1, dass zwischen den Rohranschlusstücken 2, 3 axiale, angulare als auch laterale Relativbewegungen möglich sind.

Schliesslich zeigt Fig. 6 eine Ausführungsform der Erfindung, die eine Modifikation der Ausführungsform nach Fig. 1 darstellt, indem die Gelenkfederanordnung auf einen zentralen Bereich längs der axialen Länge des Entkopplungselementes verlagert ist. Das abstromseitige Rohranschlusstück 3 hat dazu einen entsprechend axial verlängerten rohrförmigen Abschnitt 7, der gleichzeitig teilweise die Funktion eines Gehäuses übernimmt, während das eigentliche Gehäuse 4, welches mit dem aufstromseitigen Rohranschlusstück 2 verbunden ist, um ein entsprechendes Mass axial verkürzt ist. Die zentrale Lage der Gelenkfederanordnung erfordert ferner eine Modifikation des balgartig gewellten Verbindungselementes 1, indem dieses über einen axialen Bereich beidseitig der radialen Ebene, in der sich die Federeinrichtung 10 erstreckt, frei von Wellungen ist. Im übrigen entspricht der Aufbau der Gelenkfederanordnung derjenigen der Ausführungsform nach Fig.1, so dass bezüglich weiterer Details auf die betreffende Beschreibung verwiesen werden kann.

Ein gemeinsames Merkmal der vorbeschriebenen Ausführungsformen der Erfindung ist das fakultative Vorsehen von ringförmigen Schwingungsdämpfungseinlagen 17 bzw. 18 an den axialen Enden des Verbindungselementes 1. Die Dämpfungseinlage 17, welche den Rohranschlusstücken zugeordnet ist, die mit Gelenkfederanordnungen nahe den axialen Enden des Gehäuses 4 zusammenwirken, können eine grössere axiale Abmessung als die Dämpfungseinlagen 18 nahe den Rohranschlusstücken haben, bei denen keine Gelenkfederanordnung vorgesehen ist. Wie Fig. 1 und 5 ferner zeigen, kann der radiale Bund 16 des betreffenden Rohranschlusstückes in Berührung mit der betreffenden Dämpfungseinlage 17 stehen, so dass die schwingungsdämpfende Eigenschaft der Dämpfungseinlage 17 sowohl auf das Verbindungselement 1 als auch auf das betreffende Rohranschlusstück ausgeübt wird. Anstelle von oder zusätzlich zu den gezeigten ringförmigen Dämpfungseinlagen 17, 18 könnte auch eine rohrförmige Dämpfungseinlage (nicht gezeigt) vorgesehen werden, die umfänglich des Verbindungselementes 1 im Bereich zwischen dessen äusseren Umfang und dem inneren Umfang des Gehäuses 4 anzuordnen wäre.

Obschon vorausgehend die Erfindung anhand von Ausführungsformen beschrieben wurde, bei denen die axiale endseitige Abstützung der Federeinrichtungen 10 durch das Zusammenwirkung eines Positionierungsringes 8 und eines durch Umbördelung geschaffenen Ringflansches 9 gebildet ist, versteht es sich, dass die Erfindung auf eine derartige Lagefixierung der Federeinrichtungen 10 nicht beschränkt ist. Die Lagefixierung könnte auch auf andere Weise, z.B. durch eine Ringnut im erweiterten Gehäuseabschnitt 6 erfolgen, in die die Federeinrichtungen eingesetzt werden könnte. Auch könnte anstelle eines angeformten Ringflansches 9 ein Hülsenteil auf den erweiterten Gehäuseabschnitt 6 aufgeschoben werden und mit einem radialen Bereich ähnlich dem Ringflansch eine Lagefixierung bewirken.

## Patentansprüche

1. Entkopplungselement für Schwingungen in Rohrleitungen, insbesondere in Abgasanlagen von Brennkraftmaschinen, mit einem Paar axial beabstandeter, durch ein flexibles, insbesondere balgartiges Verbindungselement (1) miteinander verbundener Rohranschlusstücke (2,3) und einer Kraftübertragungseinrichtung mit wenigstens axialer Nachgiebigkeit zur Übertragung von Kräften zwischen den Rohranschlusstücken, welche ein das flexible Verbindungselement umgebendes Gehäuse (4) umfasst, das durch wenigstens eine, wenigstens ein Paar umfänglich voneinander beabstandete Federeinrichtungen (10) umfassende Gelenkfederanordnung mit einem benachbarten Rohranschlussstück verbunden ist, dadurch gekennzeichnet, dass jede Federeinrichtung (10) a) wenigstens ein in einer im wesentlichen radialen Ebene des Entkopplungselementes sich erstreckendes Blattfederelement (11) umfasst, b) mit axialem Spiel an umfänglich beabstandeten Bereichen des Gehäuses (4) endseitig abgestützt ist, c) an einer Bewegung umfänglich der Mittenlängsachse gehindert ist, und d) an einem zwischenliegenden Bereich zwischen den endseitigen Abstützungsstellen in eine zur Erstreckungsrichtung der Federeinrichtung ausgerichtete Ausnehmung (13) im Rohranschlusstück (3) eingreift, wobei die Ausnehmung erste Begrenzungsbereiche aufweist, mit denen die Federeinrichtung bei einer Bewegung des Rohranschlusstückes relativ zum Gehäuse in kraftübertragendem Eingriff bringbar ist.

2. Entkopplungselement nach Anspruch 1, gekennzeichnet durch zweite, unter einem Winkel zu den ersten Begrenzungsbereichen stehende Begrenzungsbereiche der Ausnehmung (13), mit denen die Federeinrichtung (10) in drehverhinderndem Eingriff bringbar ist.

3. Entkopplungselement nach Anspruch 1 oder 2, dadurch gekennzeichnet, dass die Federeinrichtung (10) das Rohranschlusstück (2,3) längs der Ausnehmung (13) nach Art einer Kreissekante durchsetzt.

4. Entkopplungselement nach Anspruch 1, 2 oder 3, dadurch gekennzeichnet, dass jede Federeinrichtung (10) eine Vielzahl übereinanderangeordneter Blattfederelemente (11) umfasst.

5. Entkopplungselement nach einem der vorhergehenden Ansprüche, dadurch gekennzeichnet, dass drei oder mehreren umfänglich in gleichem oder unterschiedlichem Winkelabstand voneinander beabstandeten Federeinrichtungen (10) ausgerichtete Ausnehmungen (13) des Rohranschlusstückes (2,3) zugeordnet sind.

6. Entkopplungselement nach einem der vorhergehenden Ansprüche, dadurch gekennzeichnet, dass die oder jede Ausnehmung (13) eine schlitzförmige Konfiguration mit einer Spaltweite hat, die zwischem einem Maximum und einem an einer zentralen Stelle (14) befindlichem Minimum konvergiert.

7. Entkopplungselement nach Anspruch 6, dadurch gekennzeichnet, dass die Spaltweite stetig konvergiert.

8. Entkopplungselement nach Anspruch 6, dadurch gekennzeichnet, dass die Spaltweite stufenförmig konvergiert.

9. Entkopplungselement nach einem der Ansprüche 6 bis 8, dadurch gekennzeichnet, dass die Spaltweite in Bezug auf eine mittig durch die zentrale Engstelle (14) gelegten Radialebene symmetrisch oder unsymmetrisch ist.

10. Entkopplungselement nach einem der vorhergehenden Ansprüche, gekennzeichnet durch erste die Federeinrichtungen (10) mit axialem Spiel übergreifende umgebogenen Bereiche (9) und zweite umgebogene Bereiche (15) des Gehäuses (4), die verdrehsichernd zwischen benachbarten Federeinrichtungen (10) eingreifen.

11. Entkopplungselement nach einem der vorhergehenden Ansprüche, dadurch gekennzeichnet, dass sich ein Anschlagteil (16) des Rohranschlusstückes (2,3) in einen Raum zwischen einer Gehäuseschulter (12) und der Federeinrichtung (10) erstreckt, um eine übermässige Relativbewegung zwischen dem Rohranschlusstück und dem Gehäuse zu begrenzen.

12. Entkopplungselement nach einem der vorhergehenden Ansprüche, dadurch gekennzeichnet, dass am aufstromseitigen Rohranschlusstück ein in das flexible, balgartige Verbindungselement (1) hineinragendes rohrförmiges Wärmeschutzelement (5) montiert ist.

13. Entkopplungselement nach einem der vorhergehenden Ansprüche, dadurch gekennzeichnet, dass eine Gelenkfederanordnung nahe bei oder innerhalb wenigstens eines der axialen Enden des Gehäuses (4) vorgesehen ist.

14. Entkopplungselement nach einem der Ansprüche 1 bis 14, dadurch gekennzeichnet, dass eine Gelenkfederanordnung an einem Zwischenbereich des Entkopplungselementes vorgesehen ist.

## Claims

1. A conduit vibration decoupling element, in particular in exhaust systems of internal combustion engines, including a pair of axially spaced conduit connecting members (2,3) connected with each other by a flexible, in particular bellows-type connecting element (1), and a force transmitting means having at least axial pliancy for transferring forces between the conduit connecting members, said force transmitting means comprising a housing (4) surrounding said flexible connecting element and being connected to an adjacent conduit connecting member by an articulated spring arrangement (10) comprising at least a pair of spring means circumferentially spaced from each other, characterized in that each spring means (10) a) comprises at least one leaf-type spring element (11) extending in a substantially radial plane of the decoupling element, b) is supported at its end portions with axial clearance at portions of said housing (4) circumferentially spaced from each other, c) is prevented from moving in a circumferential direction relative to a center longitudinal axis, and d) engages at an intermediate portion between its end-side supporting portions a recess (13) formed in said conduit connecting member (3) and oriented in the direction in which said spring element extends, said recess having first boundary portions with which the spring means during movement of said conduit connecting member relative to said housing can engage in a force transmitting marner.

2. The decoupling element as set forth in claim 1, characterized by second boundary portions disposed at an angle to said first boundary portions of said recess (13), said spring means (10) can engage with said second boundary portions for preventing it from being twisted.

3. The decoupling element as set forth in claim 1 or 2, characterized in that said spring means (10) crosses said conduit connecting member (2,3) along the recess (13) in a manner according to a secant of a circle.

4. The decoupling element as set forth in claim 1, 2 or 3, characterized in that each spring means (10) comprises a plurality of sandwiched leaf-type spring elements (11).

5. The decoupling element as set forth in one of the preceding claims, characterized in that three or more spring means (10) circumferentially spaced from each other in a same or different angular spacing of each other a corresponding number of recesses (13) of said conduit connecting member (2,3) is associated to, said recesses being oriented to said spring means.

6. The decoupling element as set forth in one of the preceding claims, characterized in that the said or each recess (13) has a slot-like configuration having a gap width diverging between a minimum at a central portion (14) and a maximum.

7. The decoupling element as set forth in claim 6, characterized in that said gap width diverges continuously.

8. The decoupling element as set forth in claim 6, characterized in that said gap width diverges incrementally.

9. The decoupling element as set forth in one of the claims 7 to 8, characterized in that said gap width is symmetrical or asymmetrical relative to a radial plane centrally passing through said central narrowest portion (14).

10. The decoupling element as set forth in one of the preceding claims, characterized in that said housing (4) having first bent portions (9) overlapping said spring means (10) with axial clearance and second bent portions (15) engaging between adjacent spring means to prevent rotation thereof.

11. The decoupling element as set forth in one of the preceding claims, characterized in that a stop portion of said conduit connecting member (2,3) extends in a space between a shoulder (12) of said housing and said spring means (10) for limiting a movement of said conduit connecting member relative to said housing.

12. The decoupling element as set forth in one of the preceding claims, characterized in that a tubular heat shield (5) is fitted at an upstream one of said conduit connecting members and extending to a location within said flexible, bellows-type connecting element (1).

13. The decoupling element as set forth in one of the preceding claims, characterized in that a said articulated spring arrangement is provided close to or within at least one of the axial ends of said housing (4).

14. The decoupling element as set forth in one of the preceding claims, characterized in that a said articulated spring arrangement is provided at an intermediate portion of said decoupling element.

## Revendications

1. Dispositif de découplage pour des oscillations dans des conduits, en particulier dans des installations d'échappement de moteurs à combustion interne comprenant une paire de pièces de raccord de conduit (2, 3) espacées axialement, reliées entre elles par un élément de liaison (1) flexible, en particulier du type soufflet, et un moyen de transmission de force présentant au moins une souplesse axiale pour la transmission de forces entre les pièces de raccord de conduit, lequel moyen de transmission de force comprend un boîtier (4) entourant l'élément de liaison flexible, lequel boîtier est relié par au moins un dispositif élastique articulé comprenant au moins une paire de moyens élastiques (10) espacés périphériquement l'un de l'autre à une pièce de raccord de conduit voisine, caractérisé en ce que chaque moyen élastique (10) a) comprend au moins un élément de ressort à lames (11) s'étendant dans un plan sensiblement radial du dispositif de découplage, b) s'appuie du côté de l'extrémité avec jeu axial en des zones périphériquement espacées du boîtier (4), c) est empêché de faire un mouvement autour de l'axe longitudinal central et d) s'engage dans une zone intermédiaire entre les emplacements d'appui des côtés des extrémités dans un évidement (13) aligné dans la direction dans laquelle s'étend le moyen élastique dans la pièce de raccord de conduit (3), l'évidement présentant des premières zones de limitation avec lesquelles le moyen élastique peut être amené en engagement de transmission de force lors d'un mouvement de la pièce de raccord de conduit.

2. Dispositif de découplage selon la revendication 1, caractérisé par des deuxièmes zones de limitation de l'évidement (13) se trouvant sous un angle par rapport aux premières zones de limitation, avec lesquelles le moyen élastique (10) peut être amené en engagement empêchant la rotation.

3. Dispositif de découplage selon la revendication 1 ou 2, caractérisé en ce que le moyen élastique (10) traverse la pièce de raccord de conduit (2, 3) le long de l'évidement (13) à la façon d'une sécante de cercle.

4. Dispositif de découplage selon la revendication 1, 2 ou 3, caractérisé en ce que chaque moyen élastique (10) comprend une pluralité d'éléments de ressort à lames (11) disposés les uns au dessus des autres.

5. Dispositif de découplage selon l'une quelconque des revendications précédentes, caractérisé en ce qu'à trois ou plus de trois moyens élastiques (10) espacés periphériquement les uns des autres suivant des écarts angulaires identiques ou différents sont associés des évidement alignés (13) de la pièce de raccord de conduit (2, 3).

6. Dispositif de découplage selon l'une quelconque des revendications précédentes, caractérisé en ce que le ou chaque évidement (13) possède une configuration en forme de rainure avec une largeur de fente qui converge un maximum et un minimum qui se trouve à un emplacement central (14).

7. Dispositif de découplage selon la revendication 6, caractérisé en ce que la largeur de fente converge de façon continue.

8. Dispositif de découplage selon la revendication 6, caractérisé en ce que la largeur de fente converge par échelons.

9. Dispositif de découplage selon l'une quelconque des revendications 6 à 8, caractérisé en ce que la largeur de fente est symétrique ou dissymétrique par rapport à un plan radial disposé de façon centrale à travers l'emplacement étroit central (14).

10. Dispositif de découplage selon l'une quelconque des revendications précédentes, caractérisé par des premières zones (15) du boîtier (4) recourbées empiétant sur les moyens élastiques (10) avec jeu axial qui engrènent à protection de torsion entre des moyens élastiques (10) voisins.

11. Dispositif de découplage selon l'une quelconque des revendications précédentes, caractérisé en ce qu'une partie d'arrêt (16) de la pièce de raccord de conduit (2, 3) s'étend dans un volume entre un épaulement de boîtier (12) et le moyen élastique (10) pour limiter un mouvement relatif excessif entre la pièce de raccord de conduit et le boîtier.

12. Dispositif de découplage selon l'une quelconque des revendications précédentes, caractérisé en ce qu'un élément de protection contre la chaleur (5) pénétrant dans l'élément de liaison (1) flexible en forme de soufflet est monté sur la pièce de raccord de conduit du côté du courant ascendant.

13. Dispositif de découplage selon l'une quelconque des revendications précédentes, caractérisé en ce qu'un dispositif élastique articulé est prévu à proximité ou à l'intérieur d'au moins une des extrémités axiales du boîtier (4).

14. Dispositif de découplage selon l'une quelconque des revendications 1 à 14, caractérisé en ce qu'un dispositif élastique articulé est prévu dans une zone intermédiaire de l'élément de découplage.
